# EUROPÄISCHE PATENTSCHRIFT

(11) **EP 2 759 204 B1**
(45) Veröffentlichungstag und Bekanntmachung des Hinweises auf die Patenterteilung: **27.04.2016**
(21) Anmeldenummer: 13195063.6
(22) Anmeldetag: 29.11.2013
(51) Int. Cl.: A22C 11/02

(54) **Füllmaschine**
Filling machine
Machine de remplissage

(30) Priorität: 25.01.2013 DE 102013201229
(43) Veröffentlichungstag der Anmeldung: 30.07.2014
(73) Patentinhaber: Albert Handtmann Maschinenfabrik GmbH & Co. KG, 88400 Biberach (DE)
(72) Erfinder: Betz, Andreas, 88471 Baustetten (DE); Baechtle, Manfred, 88433 Schemmerhofen (DE); Schliesser, Gerhard, 88489 Wain (DE); Winghart, Robert, 89613 Oberstadion (DE); Osswald, Florian, 89079 Ulm (DE)
(74) Vertreter: Grünecker Patent- und Rechtsanwälte PartG mbB

(56) Entgegenhaltungen:
- EP-A1- 2 468 106
- WO-A1-03/101208
- US-A- 5 273 482

## Beschreibung

Die Erfindung betrifft eine Füllmaschine gemäß Oberbegriff des Patentanspruches 1.

Beim Abfüllen von Füllgut in Wursthüllen wird das Füllgut in einer Füllmaschine unter Druck aus dem Füllrohrende ausgestoßen und im gesamten Förderbereich von der Füllpumpe bis zum Füllrohrende komprimiert. Wird der Füllvorgang unterbrochen, z.B. um eine neue Darmraupe auf das Füllrohr aufzuziehen, entspannt sich aufgrund auch eines Luftgehaltes von ca. 0,5 bis 12 % das im Füllrohr enthaltene Füllgut. Da sich das Füllgut nur in einer Richtung, nämlich durch das Füllrohrende auszudehnen vermag, tritt, unter Umständen auch bedingt durch die Viskosität des Füllgutes, am Füllrohrende Füllgut aus, das abhängig von seiner Konsistenz eine Art Füllgutzopf bildet, der zunächst am Füllrohrende herabhängt. Durch die Schwerkraft und/oder Bewegungen des Füllrohres in der Füllmaschine fällt der Füllgutzopf schließlich herab, haftet an nicht vorhersehbaren Stellen an der Maschine, die zunehmend verschmutzt wird und/oder verschmutzt aufzuziehende Darmraupen. Zum Teil sind Darmraupen bezüglich außen anhaftendem Füllgut und daraus eindringender Feuchtigkeit sehr empfindlich. Dies kann zu Funktionsstörungen, wie z.B. Darmplatzern und Gewichtsfluktuationen bei Füllvorgängen, führen.

Es sind Füllmaschinen aus der Praxis bekannt, in welchen u.a. aus diesen Gründen zumindest ein Abstreifelement eingesetzt wird, das in einer Relativbewegung zwischen dem Füllrohrende und dem Abstreifelement den Füllgutzopf abstreift und meist unkontrolliert wegschleudert, falls er nicht zunächst daran hängen bleibt. Weggeschleudertes Füllgut verschmutzt die Füllmaschine und kann aufzuziehende Darmraupen kontaminieren. Am Abstreifelement hängengebliebenes Füllgut wird beim nächsten Abstreifvorgang gegebenenfalls wieder auf ein oder das Füllrohr übertragen und gelangt damit auf neu aufzuziehende Darmraupen.

Aus US 5 273 482 A ist eine Füllmaschine für Fleischprodukte bekannt, mit der in Hüllen runde Würste mit flachen Enden herstellbar sind, um späteren Schnittverlusten vorzubauen, die sich aus gerundeten oder spitz auslaufenden Enden ergeben könnten. In die an einem Ende von einem Spannband umgriffene Hülle wird vor dem Füllvorgang mittels eines stirnseitig am Füllrohr platzierten Ringes eine ebene Endplatte eingesetzt. Dann wird befüllt. Nach dem Füllvorgang wird am anderen Ende eine zweite ebene Endplatte eingesetzt und mittels eines weiteren Spannbandes positioniert. Vor dem Einsetzen der zweiten Endplatte ist der Ring mit Füllgut verschmutzt, das die zweite Endplatte von der Vorderseite des Ringes abstreift. Innerhalb des Ringes ausgetretenes Füllgut wird dann mit der zweiten Endplatte in die Hülle zurückgedrückt.

Der Erfindung liegt die Aufgabe zugrunde, eine Füllmaschine der eingangs genannten Art zu schaffen, bei der Funktions- und/oder Betriebsstörungen aufgrund Füllgutraupen zuverlässig vermieden werden.

Die gestellte Aufgabe wird mit den Merkmalen des Patentanspruches 1 gelöst.

Das vom Trennelement bei der Relativbewegung vom Füllrohrende entfernte Füllgut bleibt an der bewusst zu diesem Zweck vorgesehenen Haftfläche am Trennelement haften. Die der Haftfläche zugeordnete Reinigungsvorrichtung säubert z.B. danach die Haftfläche vom anhaftenden Füllgut, so dass für einen nächstfolgenden Füllguttransfer entweder ein sauberer Teil der Haftfläche nutzbar oder die Haftfläche wieder sauber ist und den Füllgutzopf übernimmt, um das betroffene Füllrohrende oder das Füllrohr zu befreien. Ein zu säuberndes Füllrohr findet zum Transfer des Füllgutes stets eine saubere Haftfläche oder einen Haftflächenteil am Trennelement vor. Die insgesamte Entfernung des Füllgutes vom Füllrohr findet sozusagen in zwei Schritten statt, nämlich durch den Transfer an das Trennelement, und durch die Reinigung des Trennelementes durch die Reinigungsvorrichtung.

Bei einer zweckmäßigen Ausführungsform wird von der Reinigungsvorrichtung zumindest ein für einen nächstfolgenden Füllguttransfer bestimmter Teilbereich der Haftfläche von Füllgut gesäubert, sobald das Trennelement einen Füllgutzopf übernommen hat. Es braucht die Reinigungsvorrichtung einen anhaftenden Füllgutzopf nicht schon gleich vom Trennelement zu entfernen, bevor wieder ein Füllrohrende mit einem neuen Füllgutzopf ankommt, vorausgesetzt, die Haftfläche ist groß genug, damit ein für den nächstfolgenden Füllguttransfer bestimmter sauberer Teilbereich nutzbar ist. In diesem Fall könnten sich z.B. mehrere Füllgutraupen gleichzeitig auf dem Trennelement befinden, die sukzessive von der Reinigungsvorrichtung beseitigt werden. So bleibt für die Reinigung ein Zeitpuffer.

Günstig ist es ferner, wenn die Reinigungsvorrichtung in der Einheit stationär angeordnet ist und einen örtlich in der Füllmaschine festgelegten Füllgut-Abgabebereich definiert, vorzugsweise einen auf eine darunterliegende Sammeleinrichtung ausgerichteten Abtropfbereich. Der Reinigungsvorrichtung kommt hierbei eine zusätzliche Aufgabe zu, da sie einerseits die Haftfläche von anhaftendem Füllgut reinigt, andererseits aber bei der Reinigung das Füllgut nicht unkontrolliert auf der Füllmaschine verteilt, sondern gezielt dorthin tropfen lässt, wo eine Sammeleinrichtung vorgesehen ist, so dass die Füllmaschine nicht verschmutzt und auch keine Gefahr besteht, z.B. aufzuziehende oder aufgezogene Darmraupen zu kontaminieren.

Bei einer zweckmäßigen Ausführungsform ist die Reinigungsvorrichtung in der Einheit außerhalb des Weges der Relativbewegung angeordnet, welche zwischen dem Füllrohrende und dem Trennelement abläuft, um eine Füllgutraupe an das Trennelement zu transferieren. Das Trennelement und/oder die Haftfläche ist mit einem Bewegungsantrieb verbunden, mit dem die Haftfläche, vorzugsweise kontinuierlich, oder gegebenenfalls auch in Schritten oder hin- und hergehend, an der Reinigungsvorrichtung vorbei bewegbar ist. Das Trennelement übernimmt die Füllgutraupe von einem Füllrohr und transportiert die Füllgutraupe so zur Reinigungsvorrichtung, die sie dann entfernt, dass kein Kontakt des Füllgutes mit dem sich weiter bewegenden Füllrohr stattfindet und das Füllrohr oder ein anderes Füllrohr beim nächsten Transfer wieder eine saubere Haftfläche vorfindet.

Der Reinigungseffekt beim Säubern der Haftfläche ist besonders intensiv, wenn die Reinigungsvorrichtung wenigstens ein Füllgut-Abstreifelement aufweist, vorzugsweise eine Abstreifklinge aus Metall oder Kunststoff, oder eine Abstreiflippe aus einem Elastomer oder Gummi, die, vorzugsweise, mit der Haftfläche in einstellbarem Kontakt steht. Die Klinge oder Lippe schält das anhaftende Füllgut gründlich von der Haftfläche ab und leitet es dorthin, wo es gezielt zu einer Sammelvorrichtung herabfallen oder abtropfen kann. Es können auch zwei oder mehr Klingen oder Lippen, oder eine Klinge und eine Lippe kombiniert vorgesehen sein.

Grundsätzlich kann es zweckmäßig sein, wenn das Trennelement in der Füllmaschine stationär gelagert und das Füllrohrende durch einen Bewegungsantrieb an dem Trennelement vorbei bewegbar ist. Natürlich ist auch das umgekehrte Prinzip denkbar, nämlich das Trennelement am Füllrohrende vorbeizubewegen, oder eine Kombination beider Bewegungen.

Der Bewegungsantrieb, der das Füllrohr relativ zum Trennelement bewegt, ist zweckmäßig ein Bewegungsantrieb der Füllmaschine selbst, der Schritte zwischen aufeinanderfolgenden Füllvorgängen ausführt, z.B. das Füllrohr zwischen einer Einrichtung zum Aufziehen von Darmraupen und einer Einrichtung zum Füllen der Darmraupen in der Füllmaschine verstellt.

In einer besonders zweckmäßigen Ausführungsform ist das Trennelement eine um eine Drehachse von einem Drehantrieb drehantreibbare, ebene Scheibe. Die Scheibe kann rund, mehreckig oder segmentförmig sein. Die Scheibe besteht vorzugsweise aus Metall, wie Edelstahl oder Kunststoff, beispielsweise detektierbarem Kunststoff. Die Haftfläche wird von einer Oberfläche oder von beiden Oberflächen, gegebenenfalls einschließlich des Scheibenrandes, definiert. Die Ebene der Scheibe liegt zumindest in etwa senkrecht zur Achse des Füllrohrendes, so dass bei der Relativbewegung ein am Füllrohrende herabhängender Füllgutzopf vom Scheibenrand und zumindest einer Oberfläche übernommen wird und durch Haftung gehalten wird. Das Abstreifelement sollte in etwa radial zur Drehachse ausgerichtet sein, und, vorzugsweise, wenigstens eine einer Oberfläche der Scheibe zugeordnete Abstreifklinge oder Abstreiflippe aufweisen. In einem Fall, in welchem beide Oberflächen der Scheibe als Haftfläche genutzt werden, sollte jeder Oberfläche wenigstens eine Abstreifklinge oder Abstreiflippe zugeordnet sein.

Um die Zusammenwirkung zwischen dem Trennelement und dem Füllrohrende, beispielsweise abgestimmt auf die Konsistenz oder Klebrigkeit des Füllgutes, zu optimieren, ist es zweckmäßig, wenn die Scheibe in Richtung der Drehachse relativ zum Füllrohrende verstellbar ist.

Bei einer alternativen Ausführungsform kann das Trennelement eine ebene Platte beliebiger Form sein, beispielsweise aus Metall oder Kunststoff, die relativ zum Abstreifelement durch einen Linearantrieb linear hin- und her bewegbar ist, beispielsweise durch einen Pneumatikzylinder. Diese Platte kann ebenfalls senkrecht zur Achse des Füllrohres orientiert sein.

Bei einer weiteren Ausführungsform ist das Trennelement als ebenes endloses Förderband ausgebildet. Ein Metall-, Kunststoff- oder Elastomer-Riemen wird von wenigstens einer Antriebsrolle angetrieben. Die Außenseite des Förderbandes, gegebenenfalls einschließlich wenigstens eines Riemenrandes, definiert z.B. die Haftfläche. Das Abstreifelement der Reinigungsvorrichtung erstreckt sich quer über die Außenfläche des Förderbandes, vorzugsweise im von der Antriebsrolle abgestützten Bereich des Förderbandes, so dass dieses beim Reinigungsvorgang nicht nennenswert nachzugeben vermag und das Füllgut gründlich abgeschält wird.

Für die Anordnung des Förderbandes sind, ohne Beschränkung darauf, z.B. zwei Orientierungen zweckmäßig. Die Drehachse der Antriebsrolle ist relativ zur Achse des Füllrohrendes entweder zumindest in etwa parallel oder senkrecht. Liegt sie in etwa parallel, dann dient u.a. die Förderbandkante zum Abstreifen des Füllgutzopfes vom Füllrohrende. Liegt sie hingegen senkrecht zur Achse des Füllrohres, dann wird der Füllgutzopf direkt an die Außenseite des Förderbandes transferiert, die sie dann zum Abstreifelement hin transportiert.

Zweckmäßig ist die Haftfläche für Füllgut haftfreundlich ausgebildet oder beschichtet, damit sich zwischen dem Füllgutzopf und der Haftfläche eine Adhäsion einstellt, die Haftfläche dennoch aber gut reinigbar bleibt.

Hingegen kann die Abstreifklinge oder Abstreiflippe für Füllgut haftunfreundlich ausgebildet oder beschichtet sein, so dass die Abstreifklinge oder Abstreiflippe ihre Reinigungswirkung zwar mechanisch an der Haftfläche ausführt, abgeschältes Füllgut aber sehr leicht abtropfen lässt.

In einer zweckmäßigen Ausführungsform ist das Trennelement aus Edelstahl oder aus detektierbarem Kunststoff hergestellt. Edelstahl ist gegen aggressive Inhaltsstoffe des Füllgutes und auch gegen die mechanische Belastung der Reinigungsvorrichtung weitestgehend unempfindlich. Detektierbarer Kunststoff bietet den Vorteil, z.B. wegen enthaltenen Metalls, dass evtl. abgebrochene Abstreiferteile, die im schlechtesten Fall ins Produkt gelangen könnten, erkannt und ausgesondert werden können.

Bei einer zweckmäßigen Ausführungsform ist schließlich die Einheit oder zumindest das Trennelement mit der Reinigungsvorrichtung in der Füllmaschine aus dem Bewegungsweg des Füllrohres wegnehmbar oder herausverlagerbar montiert. Es gibt nämlich Füllgut, wie beispielsweise Salamibrät oder anderes Rohwurstbrät, das relativ kalt verarbeitet wird und fast feste Konsistenz hat. Auch ist das Problem der Expansion und des Austretens aus dem Füllrohrende bei einer Füllvorgangs-Unterbrechung nicht gravierend. Jedoch könnte der mechanische Widerstand beim Transfer an das Trennelement so groß werden, dass ein Füllrohr mit kleinerem Durchmesser gegebenenfalls verbogen wird. Für solche Brätsorten kann die ganze Einheit oder zumindest das Trennelement mit der Reinigungsvorrichtung entfernt oder verlagert, z.B. weggeschwenkt, werden, so dass es bei diesen Brätsorten außer Funktion ist.

Ausführungsformen des Erfindungsgegenstandes werden anhand der Zeichnungen erläutert. Es zeigen:
- Fig. 1: schematisch und perspektivisch ein Detail in einer Füllmaschine für Würste, in einer Betriebsphase einer Füllvorgangs-Unterbrechung,
- Fig. 2: eine Ansicht entsprechend der von Fig. 1 in einer späteren Betriebsphase,
- Fig. 3: eine Ansicht entsprechend der von Fig. 1 in einer noch späteren Betriebsphase,
- Fig. 4: eine noch spätere Betriebsphase,
- Fig. 5: eine Seitenansicht zu Fig. 1,
- Fig. 6: eine andere Ausführungsform eines Details in einer Füllmaschine für Würste, in einer Betriebsphase einer Füllvorgangs-Unterbrechung,
- Fig. 7: eine spätere Betriebsphase der Ausführungsform der Fig. 6,
- Fig. 8: eine weitere Ausführungsform eines Details in einer Füllmaschine für Würste, in einer Betriebsphase, einer Füllvorgangs-Unterbrechung, und
- Fig. 9: eine Ansicht entsprechend der von Fig. 8 in einer späteren Betriebsphase.

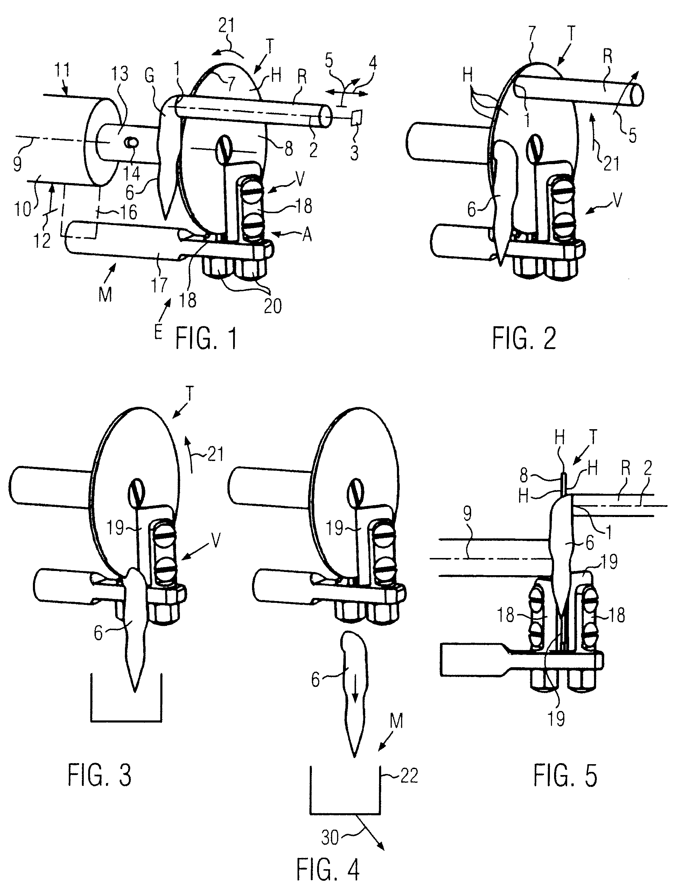

Fig. 1 zeigt von einer nicht näher dargestellten Füllmaschine M für Würste ein Füllrohr R mit einem Füllrohrende 1 und einer Achse 2 des Füllrohres R bzw. Füllrohrendes 1. Das Füllrohr R ist mit einem Bewegungsantrieb 3, beispielsweise der Füllmaschine M, verbunden, der das Füllrohr z.B. in den durch die Doppelpfeile 4 und 5 angedeuteten Richtungen bewegen kann, wobei das Füllrohrende 1 relativ zu einer in der Füllmaschine M stationär platzierten Einheit E eine Relativbewegung ausführt. Es können mehrere Füllrohre R an einem Revolverkopf vorgesehen sein, z.B. drei, die taktweise bewegt werden, und sich entweder die Einheit E teilen, oder für die jeweils eine Einheit E vorgesehen ist. Beispielsweise erfolgt die Relativbewegung in Richtung des Pfeiles 5 so, dass sich das Füllrohrende 1 ganz knapp an einem Trennelement T der Einheit E vorbeibewegt, wobei das Füllrohrende 1 eine Haftfläche H eines Trennelementes T passiert.

Grund für eine Füllvorgangs-Unterbrechung in der Füllmaschine M ist beispielsweise, dass das Füllrohr R von einer Einrichtung zum Füllen der Darmraupe zu einer anderen Einrichtung zum Aufziehen einer Darmraupe (nicht gezeigt) taktweise bewegt wird. Bei einem Füllvorgang wird Füllgut G unter Druck von einer Füllpumpe der Füllmaschine durch das Füllrohrende 1 ausgestoßen und dabei zwischen dem Füllrohrende und der Füllpumpe komprimiert. Bei der Füllvorgangs-Unterbrechung entspannt sich im Füllrohr enthaltenes Füllgut, beispielsweise aufgrund eines Luftgehaltes von ca. 0,5 bis 12 %, so dass am Füllrohrende 1, gegebenenfalls auch viskositätsbedingt, ein Füllgutzopf 6 aus dem Füllgut gebildet wird, der vom Füllrohrende 1 herabhängt.

Die Einheit E ist in der Füllmaschine z.B. stationär montiert und dient primär dazu, bei der Relativbewegung zwischen dem Füllrohr R und dem Trennelement T den Füllgutzopf 6 an das Trennelement T zu transferieren und so vom Füllrohrende 1 zu entfernen, damit die Füllmaschine M und/oder eine auf das Füllrohr R aufzuziehende Darmraupe (nicht gezeigt) nicht verschmutzt werden. Des Weiteren enthält die Einheit E eine Reinigungsvorrichtung V für das Trennelement T.

In einer Füllmaschine (nicht gezeigt), in der sich das Füllrohr nur axial bewegt, wird diese Bewegung als Relativbewegung benutzt und/oder wird auch die Einheit E oder das Trennelement T durch einen Bewegungsantrieb bewegt, z.B. wenn das Füllrohr R gar keine Bewegung in der Füllmaschine M ausführt.

In den Fig. 1 bis Fig. 5 gezeigten Ausführungsformen der Einheit E ist das Trennelement T eine kreisrunde ebene Scheibe 8 mit einem Scheibenrand 7, die um eine Drehachse 9 durch einen Drehantrieb 10 bzw. dessen Antriebswelle 13 drehantreibbar ist. Der Drehantrieb 10 kann bei 11 abgestützt sein, und gegebenenfalls so, wie bei 12 angedeutet, dass er aus der Füllmaschine M entfernbar oder zumindest aus dem Bewegungsweg des Füllrohres R wegbewegbar ist, wenn die Einheit außer Funktion zu setzen ist. Gegebenenfalls wird auch nur das Trennelement T entfernt oder verlagert (mit oder ohne die Reinigungsvorrichtung V).

Wie bei 14 angedeutet, kann die hier senkrecht zur Achse 2 des Füllrohres R platzierte Scheibe 8 in Richtung der Drehachse 9 verstellt werden, um den Abstand zu optimieren, mit dem das Füllrohrende 1 an der Scheibe 8 vorbeipassiert, wenn das Füllrohr R die Bewegung in Richtung des Pfeiles 5 ausführt.

Die Scheibe 8 definiert für den Füllgutzopf 6 eine Haftfläche H, die beispielsweise eine oder beide Oberflächen der Scheibe 8 und gegebenenfalls auch das Scheibenrand 7 umfasst. Die Drehrichtung der Scheibe 8 ist mit dem Pfeil 21 angedeutet. Die Drehung erfolgt zweckmäßig kontinuierlich, könnte aber auch schrittweise und/oder vorwärts und rückwärts ausgeführt werden.

In der in Fig. 1 gezeigten Ausführungsform ist beispielsweise die Scheibe 8 aus einem Metall, wie Edelstahl, gefertigt, oder aus einem Kunststoff, wie einem detektierbaren Kunststoff. Die Scheibe 8 ist z.B. mit einer Schraube 15 an der Antriebswelle 13 verschraubt und kann somit, beispielsweise zur Anpassung an unterschiedliche Füllgutarten oder bei Beschädigung, gegen eine andere getauscht werden.

In der Einheit E oder am Drehantrieb 10 ist über eine Abstützung 16 ein Halter 17 positioniert, an welchem ein Abstreifelement A montiert ist, das Teil der dem Trennelement T bzw. der Haftfläche H zugeordneten Reinigungsvorrichtung V ist. In der in den Fig. 1 bis Fig. 5 gezeigten Ausführungsform ist das Abstreifelement A jeweils wenigstens eine Abstreifklinge und/oder Abstreiflippe 19, die einer Oberfläche der Scheibe zugeordnet und in etwa radial auf die Drehachse 9 gerichtet ist. Die Abstreifklingen oder -lippen 19 sind hier an Haltern 18 montiert, die ihrerseits mit Befestigungsmuttern 20 einstellbar am Halter 17 festgelegt sind. Die Abstreifklingen oder Abstreiflippen 19 können aus Metall, wie Edelstahl, oder einem Kunststoff bestehen, oder auch aus einem Elastomer oder aus Gummi. Die Abstreiflippe kann auch nur einen Lippeneinsatz an einem festen Träger haben. Polyurethan oder POM sind Kunststoffsorten, die sich gut zur Herstellung der Abstreifklingen oder Abstreiflippen 19 eignen. Es kann jedoch auch Edelstahl verwendet werden. Die jeweilige Werkstoffpaarung 19/T wird u.a. abhängig vom Material des Trennelementes T gewählt.

Fig. 1 verdeutlicht eine Betriebsphase, in welcher das Füllrohr R in Richtung des Pfeiles 5 zum Trennelement T hinbewegt wird, dieses aber noch nicht erreicht hat.

Fig. 2 verdeutlicht eine spätere Betriebsphase, in welcher das Füllrohr R mit dem Füllrohrende 1 die Haftfläche H passiert, der Füllgutzopf 6 aber bereits an die Haftfläche H transferiert ist und an dieser klebt und herabhängt. Dabei hat sich die Scheibe 8 aus der Position von Fig. 1 entgegen dem Uhrzeigersinn ein Stück weitergedreht, so dass sich der an der Haftfläche H haftende Füllgutzopf 6 der Reinigungsvorrichtung nähert.

In Fig. 3 ist der Füllgutzopf 6 an der Reinigungsvorrichtung V angelangt und von zumindest einer Abstreifklinge 19 abgeschält worden, und im Begriff herabzufallen. Das Füllrohr R hat das Trennelement bereits zur Gänze passiert und kann wieder in einen Füllvorgang eingegliedert sein.

Fig. 4 verdeutlicht in einer späteren Betriebsphase, wie der von der Abstreifklinge 19 abgeschälte Füllgutzopf 6 unter Schwerkraft in eine Sammeleinrichtung 22 herabtropft, von der eine Abführeinrichtung 30 wegführen kann.

Durch die Position der Reinigungsvorrichtung V am Halter 17 und in der Einheit E ist in der Füllmaschine M eine vorbestimmte Abgabeposition für transferierte Füllgutzöpfe 6 festgelegt. Diese Abgabeposition wird zweckmäßig so gewählt, dass herabfallende Füllgutzöpfe kein Füllrohr oder andere Komponenten der Füllmaschine oder aufzuziehende bzw. aufgezogene Darmraupen kontaminieren.

Fig. 5 verdeutlicht die Betriebsphase von Fig. 1 in einer Seitenansicht. Die Ebene der Scheibe 8 liegt in etwa senkrecht zur Achse 2 des Füllrohres R, so dass die Drehachse 9 und die Achse 2 in etwa zueinander parallel aber zueinander versetzt sind. Das passierende Füllrohrende 1 hat einen kurzen Abstand von der Oberfläche der Scheibe 8. Abstreifklingen 19 sind beiden Oberflächen der Scheibe 8 zugeordnet und kontaktieren diese z.B. mit einer Linien- oder Flächenberührung. Wenn sichergestellt ist, dass nur eine Oberfläche der Scheibe 8, gegebenenfalls zusammen mit dem Scheibenrand 7, als Haftfläche H benutzt wird, reicht eine Abstreifklinge 19 nur an dieser Oberfläche. Ferner ist es möglich, derselben Oberfläche der Scheibe mehrere Abstreifklingen und/oder -lippen 19 zuzuordnen.

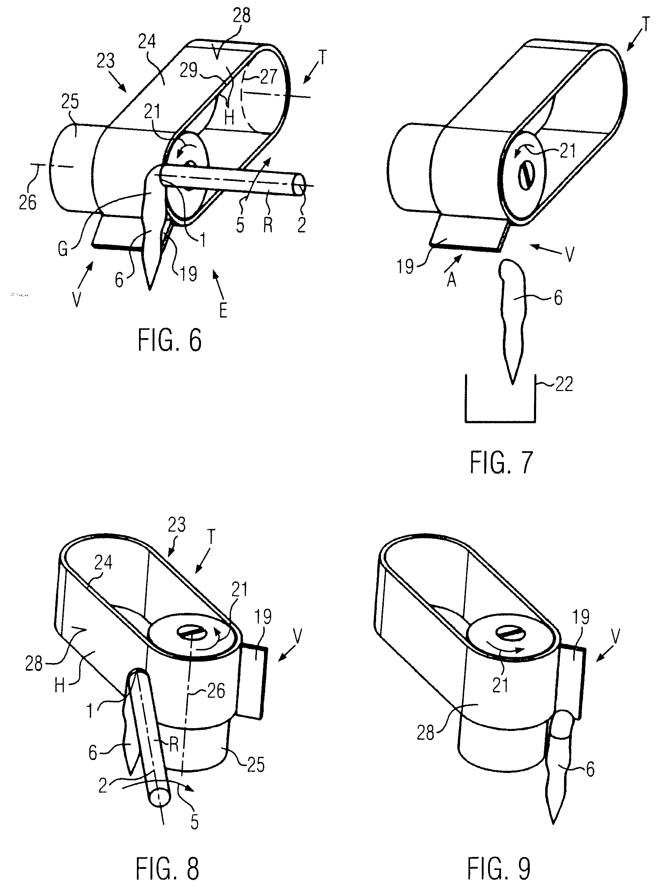

Die Ausführungsform der Einheit E in den Fig. 6 und Fig. 7 unterscheidet sich von der der Fig. 1 bis Fig. 5 dadurch, dass das Trennelement T nach Art eines endlosen Förderbandes 23 ausgebildet ist. Ein flacher Metall- oder Kunststoffriemen 24 ist über eine Antriebsrolle 26 und gegebenenfalls eine Freilaufrolle 27 gelegt und wird in Richtung des Pfeiles 21 angetrieben. Die Außenfläche 28 des Förderbandes 23 dient, gegebenenfalls einschließlich des Bandrandes 29, als die Haftfläche H für Füllgutzöpfe 6. Das Füllrohrende 1 wird beispielsweise in Richtung des Pfeiles 5 am Trennelement T bzw. dem Bandrand 29 vorbeibewegt. In diesem Fall dient vorwiegend die Bandkante 29 zum Abstreifen des Füllgutzopfes 6, der nach dem Transfer auch z.B. an der Außenfläche 28 haften bleibt. Die Drehachse 26 der Antriebsrolle 25 ist zumindest in etwa parallel zur Achse 2 des Füllrohres R. Der Außenfläche 28 des Förderbandes 23 ist zumindest eine Abstreifklinge oder Abstreiflippe 19 der Reinigungsvorrichtung V stationär zugeordnet, zweckmäßig mit Streifkontakt. Der anhaftende Füllgutzopf 6 wird dort hintransportiert, abgenommen und fällt herab. Zweckmäßig ist die Abstreifklinge oder Abstreiflippe 19 in einem Umlenkbereich des Förderbandes 23 dort angeordnet, wo der Riemen 24 abgestützt ist, so dass er beim Reinigen nicht nachzugeben vermag.

Fig. 7 verdeutlicht eine spätere Betriebsphase, in welcher sich das Füllrohr R am Trennelement T vorbeibewegt hat, während die Abstreifklinge oder Abstreiflippe 19 als Abstreifelement A den Füllgutzopf 6 von der Haftfläche H abgeschält hat und in die Sammeleinrichtung 22 tropfen lässt.

Bei einer nicht gezeigten, weiteren Ausführungsform könnte das Trennelement eine ebene in etwa senkrecht zur Achse 2 des Füllrohres R platzierte Platte aus Metall oder Kunststoff und mit beliebigem Umriss sein, die von einem Linearantrieb relativ zur Reinigungsvorrichtung hin- und herbewegt wird, um jeden transferierten Füllgutzopf 6 durch die Reinigungsvorrichtung V von der Haftfläche abzunehmen und herabfallen zu lassen.

Die in den Fig. 8 und Fig. 9 gezeigte Ausführungsform ist der der Fig. 6 ähnlich, weil ein Förderband 23 verwendet wird, dessen Außenfläche 28 die zumindest eine Abstreifklinge oder Abstreiflippe 19 der Reinigungsvorrichtung V zugeordnet ist. Jedoch ist in den Fig. 8 und Fig. 9 die Drehachse 26 der Antriebsrolle 25 zumindest in etwa senkrecht zur Achse 2 des Füllrohres R ausgerichtet, und dient im Wesentlichen hauptsächlich die Außenfläche 28 des Förderbandes 23 als Haftfläche H für den jeweiligen Füllgutzopf 6.

In Fig. 8 ist das Füllrohr R gerade im Begriff, mit dem Füllrohrende 1 z.B. am Umlenkbereich des Förderbandes 23 an dessen Außenfläche 28 vorbeizupassieren. Das Füllrohrende 1 hat das Trennelement T noch nicht erreicht.

In der Betriebsphase von Fig. 9 hat das Füllrohrende 1 den Füllgutzopf 6 an die Außenfläche 28 des Förderbandes 23 abgegeben und sich weiterbewegt, während der haftende Füllgutzopf 6 (Pfeil 21) zur Abstreifklinge oder Abstreiflippe 19 der Reinigungsvorrichtung V transportiert und abgelöst wird, und schließlich herabfällt.

Die Reinigungsvorrichtung V kann so modifiziert sein, dass, falls der Scheibenrand 7 oder der Bandrand 29 als Teil der Haftfläche H das Trennelement T benutzt wird, auch dieser von gegebenenfalls anhaftendem Füllgut G gesäubert wird.

Im Falle eines Füllrohres R, das nicht in Richtung des Pfeiles 5, wie in den gezeigten Ausführungsformen, bewegt wird, sondern gegebenenfalls nur in Richtung der Achse 2, könnte die Einheit E oder zumindest das Trennelement T relativ zum Füllrohrende 1 bewegt werden, um einen Füllgutzopf 6 an die Haftfläche H zu transferieren, der durch die Reinigungsvorrichtung V von der Haftfläche H abgenommen und kontrolliert entsorgt wird. In diesem Falle könnte sich die Einheit E oder das Trennelement T relativ zur stationären Reinigungsvorrichtung V bewegen, die diese Relativbewegung zur Säuberung nutzt.

## Patentansprüche

1. Füllmaschine (M) für Würste, mit mindestens einem Füllrohr (R), aus dessen freiliegendem Füllrohrende (1) bei einem Füllvorgang Füllgut (G) austritt, und wenigstens einer Einheit (E) zum Entfernen zumindest bei einer Füllvorgangs-Unterbrechung am Füllrohrende (1) austretenden Füllgutes, wobei die Einheit (E) wenigstens ein Trennelement (T) aufweist und zwischen dem Füllrohrende (1) und dem Trennelement (T) eine Relativbewegung (5) erzeugbar ist, **dadurch gekennzeichnet, dass** das Trennelement (T) eine Füllgut-Haftfläche (H) aufweist, an die vom Füllrohrende (1) entferntes Füllgut transferierbar und anhaftbar ist, und zum Säubern der Haftfläche (H) von Füllgut (G) eine Reinigungsvorrichtung (V) vorgesehen ist.

2. Füllmaschine nach Anspruch 1, **dadurch gekennzeichnet, dass** mit der Reinigungsvorrichtung (V) zumindest jeweils ein für einen nächstfolgenden Füllgut-Entfernschritt bestimmter Teilbereich der Haftfläche (H) von Füllgut (G) des Füllgutzopfes (6) säuberbar ist.

3. Füllmaschine nach Anspruch 1, **dadurch gekennzeichnet, dass** die Reinigungsvorrichtung (V) in der Einheit (E) stationär angeordnet ist und einen örtlich in der Füllmaschine (M) festgelegten Füllgut-Abgabebereich definiert, vorzugsweise einen auf eine Sammeleinrichtung (22) ausgerichteten Abtropfbereich.

4. Füllmaschine nach Anspruch 1, **dadurch gekennzeichnet, dass** die Reinigungsvorrichtung (V) in der Einheit (E) außerhalb des Weges der Relativbewegung (5) angeordnet ist, und dass das Trennelement (T) und/oder die Haftfläche (H) mit einem Bewegungsantrieb (10, 25) verbunden ist, mit dem die Haftfläche (H), vorzugsweise kontinuierlich, an der Reinigungsvorrichtung (V) vorbei bewegbar ist.

5. Füllmaschine nach Anspruch 1, **dadurch gekennzeichnet, dass** die Reinigungsvorrichtung (V) wenigstens ein Füllgut-Abstreifelement (A) aufweist, vorzugsweise eine Abstreifklinge (19) aus Metall oder Kunststoff, und/oder eine Abstreiflippe (19) aus einem Elastomer oder Gummi, die, vorzugsweise, mit der Haftfläche (H) in einstellbarem Kontakt steht.

6. Füllmaschine nach wenigstens einem der Ansprüche 1 bis 5, **dadurch gekennzeichnet, dass** das Trennelement (T) in der Füllmaschine (M) stationär gelagert und das Füllrohr (R) mit dem Füllrohrende (1) durch einen Bewegungsantrieb (3) an dem Trennelement (T) vorbei bewegbar ist, vorzugsweise durch einen Schritte zwischen aufeinanderfolgenden Füllvorgängen ausführenden Produktions-Bewegungsantrieb (3) der Füllmaschine (M).

7. Füllmaschine nach wenigstens einem der vorhergehenden Ansprüche, **dadurch gekennzeichnet, dass** das Trennelement (T) eine um eine Drehachse (9) von einem Drehantrieb (10) drehantreibbare, ebene Scheibe (8) ist, vorzugsweise aus Metall oder Kunststoff, deren in etwa senkrecht zur Achse (2) des Füllrohrendes (1) platzierte eine Oberfläche oder beide Oberflächen, gegebenenfalls zusammen mit dem Scheibenrand, die Haftfläche (H) definiert(en), und dass das Abstreifelement (A) in etwa radial zur Drehachse (9) ausgerichtet ist und, vorzugsweise, wenigstens eine zumindest einer Oberfläche zugeordnete Abstreifklinge oder Abstreiflippe (19) aufweist.

8. Füllmaschine nach Anspruch 7, **dadurch gekennzeichnet, dass** die Scheibe (8) zumindest in Richtung der Drehachse (9) und relativ zum Bewegungsweg des Füllrohrendes (1) verstellbar ist.

9. Füllmaschine nach wenigstens einem der Ansprüche 1 bis 6, **dadurch gekennzeichnet, dass** das Trennelement (T) eine ebene Platte ist, vorzugsweise aus Metall oder Kunststoff, die relativ zum Abstreifelement (A) durch einen Linearantrieb linear hin- und herbewegbar ist.

10. Füllmaschine nach wenigstens einem der Ansprüche 1 bis 6, **dadurch gekennzeichnet, dass** das Trennelement (T) mit einem von wenigstens einer Antriebsrolle (25) antreibbaren Metall- oder Kunststoff- oder Elastomer-Riemen (24) als endloses Förderband (23) ausgebildet ist, dessen Außenseite (28), gegebenenfalls einschließlich des Bandrandes (29), die Haftfläche (H) definiert, und dass sich das Abstreifelement (A) zumindest quer über die Außenseite (28) erstreckt, vorzugsweise im von der Antriebsrolle (25) abgestützten Bereich des Förderbandes (23).

11. Füllmaschine nach Anspruch 10, **dadurch gekennzeichnet, dass** die Drehachse (26) der Antriebsrolle (25) zur Achse (2) des Füllrohrendes (1) entweder zumindest in etwa parallel oder senkrecht ausgerichtet ist.

12. Füllmaschine nach wenigstens einem der vorhergehenden Ansprüche, **dadurch gekennzeichnet, dass** die Haftfläche (H) für Füllgut (G) haftfreundlich ausgebildet oder beschichtet ist.

13. Füllmaschine nach wenigstens einem der Ansprüche 5 bis 12, **dadurch gekennzeichnet, dass** die Abstreifklinge oder Abstreiflippe (19) für Füllgut (G) haftunfreundlich ausgebildet oder beschichtet ist.

14. Füllmaschine nach wenigstens einem der vorhergehenden Ansprüche, **dadurch gekennzeichnet, dass** das Trennelement (T) aus Edelstahl oder detektierbarem Kunststoff hergestellt ist.

15. Füllmaschine nach wenigstens einem der vorhergehenden Ansprüche, **dadurch gekennzeichnet, dass** die Einheit (E) in der Füllmaschine (M) aus dem Bewegungsweg (5) des Füllrohres (R) wegnehmbar oder herausverlagerbar montiert ist.

## Claims

1. A filling machine (M) for sausages, comprising at least one filling tube (R), from the exposed filling tube end (1) of which filling material (G) exits during a filling process, and at least one unit (E) for removing filling material exiting the filling tube end (1) at least during a filling process interruption, wherein the unit (E) includes at least a separator element (T) and a relative movement (5) can be generated between the filling tube end (1) and the separator element (T), **characterized in that** the separator element (T) includes a filling material adhesion surface (H) to which filling material that has been removed from the filling tube end (1) is transferable and adherable, and that for removing filling material (G) from the adhesion surface (H) a cleaning device (V) is provided.

2. The filling machine according to claim 1, **characterized in that**, making use of the cleaning device (V), at least an adhesion surface subarea, which is intended to be used for the next filling material removal step, can be cleaned by removing therefrom filling material (G) of the filling material plait (6).

3. The filling machine according to claim 1, **characterized in that** the cleaning device (V) is arranged stationarily in the unit (E), and defines a filling material detachment area which is locally determined in the filling machine (M), preferably a dripping area oriented towards a collecting means (22).

4. The filling machine according to claim 1, **characterized in that** the cleaning device (V) is arranged in the unit (E) outside the path of the relative movement (5), and that the separator element (T) and/or the adhesion surface (H) is/are connected to a motion drive (10, 25) with which the adhesion surface (H) can be moved past the cleaning device (V), preferably in a continuous mode.

5. The filling machine according to claim 1, **characterized in that** the cleaning device (V) includes at least one filling material wiper element (A), preferably a wiper blade (19) made of metal or plastic material, and/or a wiper lip (19) made of an elastomer or rubber, which is preferably in adjustable contact with the adhesion surface (H).

6. The filling machine according to at least one of the claims 1 to 5, **characterized in that** the separator element (T) is stationarily supported in the filling machine (M) and that, by means of a motion drive (3), the filling tube (R) is adapted to be moved past the separator element (T) with its filling tube end (1), preferably by means of a production motion drive (3) of the filling machine (M) carrying out steps between successive filling processes.

7. The filling machine according to at least one of the preceding claims, **characterized in that** the separator element (T) is a flat disk (8), which is adapted to the rotatably driven about a rotary axis (9) by a rotary drive (10) and which is preferably made of metal or plastic material, whose one or both surface(s), which is/are positioned approximately at right angles to the axis (2) of the filling tube end (1), define(s), possibly together with the disk edge, the adhesion surface (H), and that the wiper element (A) is oriented approximately radially to the rotary axis (9) and includes preferably at least one wiper blade or wiper lip (19) associated with at least one surface.

8. The filling machine according to claim 7, **characterized in that** the disk (8) is displaceable at least in the direction of the rotary axis (9) and relative to the path of movement of the filling tube end (1).

9. The filling machine according to at least one of the claims 1 to 6, **characterized in that** the separator element (T) is a flat disk, made preferably of metal or of a plastic material, which is adapted to be moved linearly to and fro relative to the wiper element (A) by means of a linear drive.

10. The filling machine according to at least one of the claims 1 to 6, **characterized in that** the separator element (T) is configured such that it comprises a metal or plastic or elastomer belt (24) as an endless conveyor belt (23), which is adapted to be driven by at least one drive roll (25) and the outer surface (28) of which defines, possibly together with the belt edge (29), the adhesion surface (H), and that the wiper element (A) extends at least transversely across the outer surface (28), preferably in the area of the conveyor belt (23) supported by the drive roll (25).

11. The filling machine according to claim 10, **characterized in that** the rotary axis (26) of the drive roll (25) is oriented relative to the axis (2) of the filling tube end (1) either at least approximately parallel or perpendicular thereto.

12. The filling machine according to at least one of the preceding claims, **characterized in that** the adhesion surface (H) is configured or coated such that filling material (G) will easily adhere thereto.

13. The filling machine according to at least one claims 5 to 12, **characterized in that** the wiper blade or wiper lip (19) is configured or coated such that filling material (G) will not easily adhere thereto.

14. The filling machine according to at least one of the preceding claims, **characterized in that** the separator element (T) is made of stainless steel or of detectable plastic material.

15. The filling machine according to at least one of the preceding claims, **characterized in that** the unit (E) is mounted in the filling machine (M) such that it can be removed from or taken out of the path of movement (5) of the filling tube (R).

## Revendications

1. Machine de remplissage (M) pour saucisses avec au moins un tube de remplissage (R), par l'extrémité de tube de remplissage (1) libre duquel s'échappe un produit de remplissage (G) lors d'un processus de remplissage, et au moins une unité (E) pour retirer, du moins lors d'une interruption du processus de remplissage, du produit de remplissage sortant de l'extrémité de tube de remplissage (1), où l'unité (E) comporte au moins un élément de séparation (T) et où un mouvement relatif (5) entre l'extrémité de tube de remplissage (1) et l'élément de séparation (T) peut être généré, **caractérisée en ce que** l'élément de séparation (T) comporte une surface d'adhérence de produit de remplissage (H) à laquelle le produit de remplissage retiré de l'extrémité de tube de remplissage (1) peut être transféré et adhérer, et qu'un dispositif de nettoyage (V) est prévu pour nettoyer la surface d'adhérence (H) afin d'en retirer le produit de remplissage (G).

2. Machine de remplissage selon la revendication 1, **caractérisé en ce qu'**à l'aide du dispositif de nettoyage (V), respectivement au moins une partie de la surface d'adhérence (H) destinée à être utilisée lors d'une prochaine étape d'élimination de produit de remplissage est nettoyable pour en retirer le produit de remplissage (G) de la tresse de produit de remplissage (6).

3. Machine de remplissage selon la revendication 1, **caractérisé en ce que** le dispositif de nettoyage (V) est disposé de manière stationnaire dans l'unité (E) et définit une zone de dépôt de produit de remplissage localement définie dans la machine de remplissage (M), de préférence une zone d'égouttage orientée vers un moyen de collecte (22).

4. Machine de remplissage selon la revendication 1, **caractérisée en ce que** le dispositif de nettoyage (V) est disposé dans l'unité (E) à l'écart du chemin du mouvement relatif (5), et que l'élément de séparation (T) et/ou la surface d'adhérence (H) sont reliées à un ensemble d'entraînement (10, 25) avec lequel la surface d'adhérence (H) est déplaçable, de préférence en continu, au-delà du dispositif de nettoyage (V).

5. Machine de remplissage selon la revendication 1, **caractérisée en ce que** le dispositif de nettoyage (V) comporte au moins un élément de raclage (A) du produit de remplissage, de préférence une lame de raclage (19) en métal ou en plastique, et/ou une lèvre de raclage (19) en un élastomère ou en caoutchouc qui est de préférence en contact réglable avec la surface d'adhérence (H).

6. Machine de remplissage selon au moins une des revendication 1 à 5, **caractérisée en ce que** l'élément de séparation (T) est monté de manière stationnaire dans la machine de remplissage (M) et que le tube de remplissage (R) est déplaçable avec l'extrémité de tube de remplissage (1) au-delà de l'élément de séparation (T) par un ensemble d'entraînement (3), de préférence par un ensemble d'entraînement de production (3) de la machine de remplissage (M) exécutant des étapes entre processus de remplissage successifs.

7. Machine de remplissage selon au moins une des revendications précédentes, **caractérisée en ce que** l'élément de séparation (T) est un disque (8) plan, de préférence en métal ou en matière plastique pouvant être mis en rotation autour d'un axe de rotation (9) par un dispositif d'entraînement en rotation (10) et dont l'une des surfaces ou les deux surfaces placées approximativement perpendiculairement à l'axe (2) de l'extrémité de tube de remplissage (1) définit/définissent la surface d'adhérence (H), le cas échant conjointement avec le bord du disque, et que l'élément de raclage (A) est orienté approximativement radialement par rapport à l'axe de rotation (9) et, de préférence, comporte au moins une lame de raclage ou une lèvre de raclage (19) associée à au moins une surface.

8. Machine de remplissage selon la revendication 7, **caractérisée en ce que** le disque (8) est réglable au moins dans la direction de l'axe de rotation (9) et relativement au chemin de déplacement du tube de remplissage (1).

9. Machine de remplissage selon au moins une des revendications 1 à 6, **caractérisée en ce que** l'élément de séparation (T) est une plaque plane, de préférence en métal ou en matière plastique, qui est déplaçable, par un entraînement linéaire, de manière linéaire en va-et-vient par rapport à l'élément de raclage (A).

10. Machine de remplissage selon au moins une des revendications 1 à 6, **caractérisée en ce que** l'élément de séparation (T) est formé avec une courroie (24) en métal ou en matière plastique ou en élastomère pouvant être entraînée par au moins un rouleau d'entraînement (25) à la manière d'un convoyeur à bande (23) sans fin, dont le côté extérieur (28), le cas échéant incluant le bord (29) de la bande, définit la surface d'adhérence (H) et que l'élément de raclage (A) s'étend au moins transversalement par-dessus le côté extérieur (28), de préférence dans la zone du convoyeur à bande (23) supportée par le rouleau d'entraînement (25).

11. Machine de remplissage selon la revendication 10, **caractérisée en ce que** l'axe de rotation (26) du rouleau d'entraînement (25) est orienté soit au moins approximativement parallèlement ou perpendiculairement à l'axe (2) de l'extrémité de tube de remplissage (1).

12. Machine de remplissage selon au moins une des revendications précédentes, **caractérisée en ce que** la surface d'adhérence (H) est conçue ou revêtue de manière à favoriser l'adhésion du produit de remplissage (G).

13. Machine de remplissage selon au moins une des revendications 5 à 12, **caractérisée en ce que** la lame de raclage ou la lèvre de raclage (19) est conçue ou revêtue de manière à ne pas favoriser l'adhésion du produit de remplissage (G).

14. Machine de remplissage selon au moins une des revendications précédentes, **caractérisée en ce que** l'élément de séparation (T) est en acier inoxydable ou en matière plastique détectable.

15. Machine de remplissage selon au moins une des revendications précédentes, **caractérisée en ce que** l'unité (E) est montée dans la machine de remplissage (M) de manière à pouvoir être retirée ou déplacée en dehors du chemin de déplacement (5) du tube de remplissage (R).
